Europäisches Patentamt

European Patent Office

Office européen des brevets

(11) Veröffentlichungsnummer: **0 348 634 B1**

# (12) EUROPÄISCHE PATENTSCHRIFT

(45) Veröffentlichungstag der Patentschrift: **09.12.92**

(51) Int. Cl.$^5$: **B60G 17/00**

(21) Anmeldenummer: **89107851.1**

(22) Anmeldetag: **29.04.89**

(54) **Regelungseinrichtung zur Wankstabilisierung eines Fahrzeugs.**

(30) Priorität: **27.06.88 DE 3821610**

(43) Veröffentlichungstag der Anmeldung:
**03.01.90 Patentblatt 90/01**

(45) Bekanntmachung des Hinweises auf die
Patenterteilung:
**09.12.92 Patentblatt 92/50**

(84) Benannte Vertragsstaaten:
**DE FR GB IT SE**

(56) Entgegenhaltungen:
**EP-A- 0 114 757**
**EP-A- 0 236 947**
**EP-A- 0 249 246**
**DE-A- 2 844 413**

**AUTOMOTIVE ENGINEERING. vol. 95, no. 2,
Februar 1987, WARRENDALE US Seiten 122 -
132; "Programmed suspension provides ride
control"**

(73) Patentinhaber: **Bayerische Motoren Werke Aktiengesellschaft
Patentabteilung AJ-30 Postfach 40 02 40 Petuelring 130
W-8000 München 40(DE)**

(72) Erfinder: **Kindermann, Siegfried
Nikolaus-Lenau-Strasse 27
W-8047 Karlsfeld(DE)**
Erfinder: **Györy, Emil
Leonrodstrasse 9
W-8000 München 19(DE)**
Erfinder: **Heiland, Hans
Strassbergerstrasse 47
W-8000 München 47(DE)**

## Beschreibung

Die Erfindung betrifft eine Regelungseinrichtung zur Wankstabilisierung eines Fahrzeugs, mit den im Oberbegriff des Patentanspruchs I angegebenen Merkmalen. Eine derartige Regelungseinrichtung ist aus EP-A-0 236 947 bekannt.

Aus der DE-A 28 44 413 ist bereits eine derartige Regelungseinrichtung zur Wankstabilisierung eines Fahrzeugs bekannt, die über hydraulisch verstellbare Federbeine ein bei Kurvenfahrt der Kurvenneigung des Fahrzeugaufbaus entgegengerichtetes Stabilisierungsmoment bewirkt. Ein am Fahrzeug angeordneter Querbeschleunigungsmesser gibt Signale an einen Regler ab, der mit einem als Störbeobachter dienenden Mikroprozessor zusammenwirkt. Durch den Regler werden elektrohydraulische Ventile betätigt, die einen entsprechenden Ölzufluß oder -abfluß an den hydraulischen Federbeinen bewirken. Besonders nachteilig ist, daß das jeweils vordere und hintere Federbein mit gleichem Druck beaufschlagt wird. Beispielsweise beim schnellen Anlenken des Fahrzeugs wird an der Vorderradachse eine große, sprunghaft ansteigende Querkraft verursacht, die Pendelbewegungen des Fahrzeugs um die Hochachse bewirkt. Derartige Pendelbewegungen sind mit schwankenden Seitenkräften und veränderlichen Schräglaufwinkeln an den Fahrzeugreifen verbunden, so daß sich ein unsicheres Fahrverhalten des Fahrzeugs ergibt.

Der Erfindung liegt die Aufgabe zugrunde, eine Regelungseinrichtung nach dem Oberbegriff des Patentanspruchs 1 anzugeben, die eine Wankstabilisierung und eine Verbesserung des Fahrverhaltens eines Fahrzeugs bewirkt.

Diese Aufgabe ist durch die im Kennzeichen des Patentanspruchs 1 angegebenen Merkmale gelöst. Die Regelungseinrichtung ist bei Geradeausfahrt nicht aktiviert und vermeidet deshalb die bei unebener Fahrbahn durch bekannte Wankstabilisierungseinrichtungen hervorgerufene Komfortminderung. Werden beispielsweise beim Einfahren in eine Kurve die Schwellwerte für die Querbeschleunigung und den Lenkwinkel überschritten, so wird zunächst ein stabilisierendes Wankmoment größtenteils an der Hinterradachse des Fahrzeugs bewirkt. Durch ein derartiges stabilisierendes Wankmoment werden Pendelbewegungen des Fahrzeugs um die Hochachse weitgehend vermieden. Innerhalb einer von Parametern abhängigen Übergangszeit wird das stabilisierende Wankmoment mit einer vorgegebenen Wankmomentenverteilung von den Stellgliedern der Vorderradachse und der Hinterradachse gebildet. Die Regelungseinrichtung mit veränderlicher Wankmomentenverteilung verbessert in vorteilhafter Weise das Eigenlenkverhalten des Fahrzeugs und die Fahrsicherheit durch Reduzierung der dynamischen Radlastschwankungen bei Kurvenfahrt und unebener Fahrbahn.

Vorteilhafte Ausgestaltungen der Erfindung sind Gegenstand von Unteransprüchen.

Ein Ausführungsbeispiel der Erfindung wird anhand einer Zeichnung näher erläutert. Es zeigen

Fig. 1    die Anordnung einzelner Elemente der Regelungseinrichtung in einer Prinzipskizze und

Fig. 2    eine Gegenüberstellung von Wankmomentenverteilungen zwischen Vorder- und Hinterradachse in der Übergangszeit.

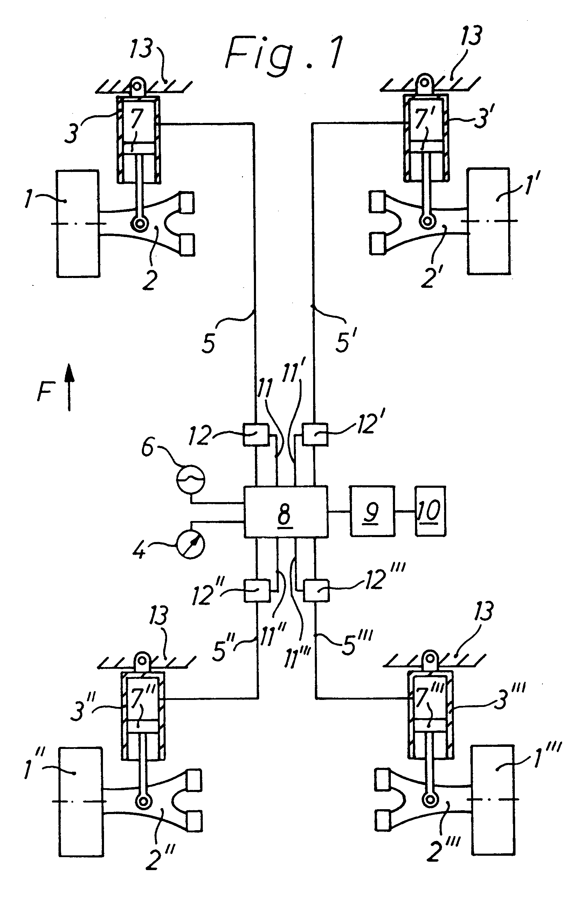

Die in Fig. 1 lediglich in einer Prinzipskizze dargestellte Regelungseinrichtung ist zur Wankstabilisierung eines vorwärts in Richtung des Pfeiles F fahrenden Kraftfahrzeugs vorgesehen. Die Regelungseinrichtung weist an jedem Fahrzeugrad 1, 1', 1", 1''' ein zwischen dem Radträger oder einem Radführungselement 2, 2', 2", 2''' des betreffenden Fahrzeugrades I, 1', 1", 1''' an den Enden gelenkig angeordnetes, etwa in vertikaler Richtung krafterzeugendes Stellglied 3, 3', 3", 3''' auf. Die Stellglieder 3, 3', 3", 3''' sind bei dem Ausführungsbeispiel hydraulisch von einem Kompressor 4 mit Druck beaufschlagbare Zylinder-Kolben-Einheiten. Die Stellglieder könnten aber auch auf andere Weise krafterzeugend wirken. Um eine einfache Darstellung zu erhalten, sind die Zylinder-Kolben-Einheiten jeweils mit einer einzigen Leitung 5, 5', 5", 5''' verbunden, die eine Druckmittelzufuhr zu den Stellgliedern 3, 3', 3", 3''' und einen Druckmittelablaß zu einem Druckspeicher 6 ermöglicht. Die im Ausführungsbeispiel einseitig mit Druck beaufschlagbaren Kolben 7, 7', 7", 7''' der Stellglieder 3, 3', 3", 3''' könnten aber auch beidseitig mit Druck beaufschlagbar sein, wobei entsprechende zusätzliche Leitungen vorzusehen sind, die beispielsweise unter Zwischenschaltung von Ventilen in eine gemeinsame Druckmittelzuleitung oder -ablaßleitung münden. Die Radaufhängungen der Fahrzeugräder 1, 1', 1", 1''' sind vereinfacht durch die als Dreieckslenker ausgebildeten Radführungselemente 2, 2', 2", 2''' dargestellt. Grundsätzlich können beliebige, an sich bekannte Radaufhängungen verwendet werden. Die Regelungseinrichtung weist im Ausführungsbeispiel einen Regler 8 auf, der mit einem als Störbeobachter dienenden Prozessor 9 in Verbindung steht. Der Prozessor 9 ist mit einer Meßeinrichtung 10 verbunden, die gemessenen Fahrzeugparametern entsprechende Signale liefert. Die Meßeinrichtung 10 könnte auch direkt mit dem Regler 8 verbunden sein. Ebenso ist es nicht in jedem Fall erforderlich, daß ein Prozessor 9 vorgesehen ist. Der Regler 8 oder in Abänderung des Ausführungsbeispiels der Prozessor 9 steuert über entsprechende Steuerleitungen 11, 11', 11", 11''' Ventile 12, 12', 12", 12''' an, um eine entsprechende Druckmittelzufuhr oder einen -ablaß an den Stellgliedern 3, 3′, 3″, 3‴ zu erreichen. Befindet sich ein Ventil in seiner Normalstellung, so ist die betreffende Leitung 5, 5′, 5″, 5‴ gesperrt. Die Regelungseinrichtung wird aktiviert, wenn die von der Meßeinrichtung 10 erfaßten Schwellwerte für die Querbeschleunigung des Fahrzeugs und für den Lenkraddrehwinkel überschritten werden. In diesem Fall wird von den Stellglieder 3, 3′, 3″, 3‴ ein Wankbewegungen des Fahrzeugaufbaus 13 entgegenwirkendes, stabilisierendes Wankmoment in der nachfolgend beschriebenen Weise erzeugt. Unmittelbar nach der Aktivierung der Regelungseinrichtung wird das stabilisierende Wankmoment größtenteils von den Stellgliedern 3″, 3‴ an der Hinterradachse des Fahrzeugs erzeugt. Anschließend wird innerhalb einer von Parametern abhängigen Übergangszeit die Wankmomentenverteilung zwischen der Vorderradachse und der Hinterradachse von der Regelungseinrichtung auf eine voreingestellte, feste Wankmomentenverteilung verändert, die dann so lange erhalten bleibt, bis die beiden Schwellwerte für die Querbeschleunigung des Fahrzeugs und für den Lenkraddrehwinkel unterschritten werden, so daß die Regelungseinrichtung abschaltet. Bei einer erneuten Aktivierung der Regelungseinrichtung wiederholt sich der Vorgang. Die Größe des von den Stellgliedern 3, 3′, 3″, 3‴ erzeugten stabilisierenden Wankmoments hängt bei dem Ausführungsbeispiel von den etwa vertikalen Radabständen vom Fahrzeugaufbau, dem Lenkraddrehwinkel und den etwa vertikalen Radeinfederungsgeschwindigkeiten ab. Ebenso könnte die Größe des stabilisierenden Wankmoments auch von anderen Parametern oder nur von den etwa vertikalen Radabständen vom Fahrzeugaufbau abhängen.

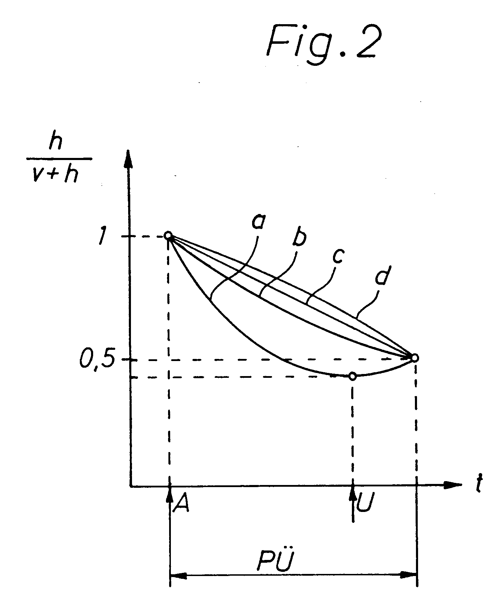

Die Veränderung der Wankmomentenverteilung des stabilisierenden Wankmoments in der Übergangszeit weist bei dem Ausführungsbeispiel den in Fig. 2 mit c gekennzeichneten linearen Verlauf auf. In der Figur ist auf der Abszisse die Zeit t und als Ordinate das Verhältnis des an der Hinterradachse erzeugten Wankmomentenanteils h zu dem gesamten, an der Vorderradachse und an der Hinterradachse erzeugten stabilisierenden Wankmoments v + h aufgetragen. Wie aus der Figur ersichtlich ist, wird bei dem Ausführungsbeispiel zu dem Zeitpunkt A der Aktivierung der Regelungseinrichtung das gesamte stabilisierende Wankmoment nur von den Stellgliedern an der Hinterradachse erzeugt. Innerhalb einer von Parametern abhängigen Übergangszeit PÜ wird die Wankmomentenverteilung von der Regelungseinrichtung gemäß dem linearen Verlauf c auf einen Wert von 0,5 gebracht. Nach der Aktivierung der Regelungseinrichtung wird somit der von den Stellgliedern an der Hinterradachse erzeugte Wankmomentenanteil vermindert und der von den Stellgliedern an der Vorderradachse erzeugte Wankmomentenanteil erhöht.

Mit dem Ablauf der Übergangszeit PÜ wird bei dem Ausführungsbeispiel das stabilisierende Wankmoment zu gleichen Teilen einerseits von den Stellgliedern der Vorderradachse und andererseits von den Stellgliedern der Hinterradachse gebildet. Selbstverständlich könnte nach Ablauf der Übergangszeit auch eine andere Wankmomentenverteilung vorliegen. Die Änderung der Wankmomentenverteilung in der Übergangszeit PÜ kann auch einen beispielsweise durch die Linien a, b, d gekennzeichneten nichtlinearen Verlauf oder einen anderen, beispielsweise unregelmäßigen Verlauf aufweisen. Die Wankmomentenverteilung in der Übergangszeit PÜ kann von dem Lenkraddrehwinkel, der Fahrzeuggeschwindigkeit, der Fahrzeugbeschleunigung bzw. -verzögerung oder anderen Parametern abhängen. Weist die Änderung der Wankmomentenverteilung einen der Linie a entsprechenden Verlauf auf, so wird die Wankmomentenverteilung ab dem Umkehrzeitpunkt U derart vorgenommen, daß sich der von den Stellgliedern an der Hinterradachse erzeugte Wankmomentenanteil erhöht und der von den Stellgliedern an der Vorderradachse erzeugte Wankmomentenanteil vermindert, bis am Ende der Übergangszeit PÜ die voreingestellte feste Wankmomentenverteilung erreicht ist oder die Regelungseinrichtung beim Unterschreiten der Schwellwerte für die Querbeschleunigung des Fahrzeugs und für den Lenkraddrehwinkel abschaltet. Die Länge der Übergangszeit hängt bei dem Ausführungsbeispiel von der Gierwinkelgeschwindigkeit des Fahrzeugs und den etwa vertikalen Radeinfederungsgeschwindigkeiten ab. Ebenso könnte die Länge der Übergangszeit PÜ auch von anderen Parametern, beispielsweise von der Lenkradwinkelgeschwindigkeit abhängen. Es ist auch möglich, daß die unmittelbar nach der Aktivierung der Regelungseinrichtung vorliegende Wankmomentenverteilung zwischen der Vorder- und Hinterradachse so lange aufrechterhalten wird, bis der Absolutwert der Lenkwinkelgeschwindigkeit einen unteren Wert, beispielsweise den Wert Null, erreicht. Bei dem Ausführungsbeispiel ist die Dämpfkraft von zwischen den Radführungselementen und dem Fahrzeugaufbau angeordneten, nicht dargestellten Dämpfern erhöht, wenn die Regelungseinrichtung aktiviert ist.

## Patentansprüche

1. Regelungseinrichtung zur Wankstabilisierung eines Fahrzeugs, mit zwischen den Radträgern oder Radführungselementen (2, 2', 2", 2'") und dem Fahrzeugaufbau (13) angeordneten, etwa in vertikaler Richtung krafterzeugenden Stellgliedern (3, 3', 3", 3'"), die nach einer durch Überschreiten eines Schwellwertes des Lenkraddrehwinkels mitverursachten Aktivierung der Regelungseinrichtung am Fahrzeugaufbau (13) ein Wankbewegungen entgegenwirkendes, stabilisierendes Wankmoment bewirken, das von der Regelungseinrichtung in einer von Parametern abhängigen Übergangszeit (PÜ) in Abhängigkeit von den etwa vertikalen Radabständen vom Fahrzeugaufbau (13) bestimmt wird, wobei die Regelungseinrichtung die Querbeschleunigung des Fahrzeugs berücksichtigt und wobei nach der Aktivierung der Regelungseinrichtung das stabilisierende Wankmoment zunächst größtenteils von den Stellgliedern (3", 3'") an der Hinterradachse gebildet ist und die Wankmomentenverteilung zwischen der Vorder- und Hinterradachse am Ende der Übergangszeit (PÜ) einen festgelegten Wert aufweist, dadurch gekennzeichnet, daß die Querbeschleunigung des Fahrzeugs dadurch berücksichtigt ist, daß die Regelungseinrichtung durch Überschreiten von Schwellwerten der Querbeschleunigung des Fahrzeugs und des Lenkraddrehwinkels aktiviert wird und in der Übergangszeit (PÜ) die Wankmomentenverteilung des stabilisierenden Wankmoments auf die Vorder- und Hinterradachse bestimmt und entsprechend verändert.

2. Regelungseinrichtung nach Anspruch 1, dadurch gekennzeichnet, daß die Parameter die Gierwinkelgeschwindigkeit des Fahrzeugs und die etwa vertikalen Radeinfederungsgeschwindigkeiten oder die Lenkradwinkelgeschwindigkeit enthalten.

3. Regelungseinrichtung nach Anspruch 1 oder 2, dadurch gekennzeichnet, daß die aktivierte Regelungseinrichtung beim Unterschreiten von Schwellwerten für die Querbeschleunigung des Fahrzeugs und für den Lenkraddrehwinkel abschaltet.

4. Regelungseinrichtung nach einem der Ansprüche 1 bis 3, dadurch gekennzeichnet, daß die Veränderung der Wankmomentenverteilung in der Übergangszeit (PÜ) derart vorgenommen wird, daß sich der von den Stellgliedern (3″, 3‴) an der Hinterradachse erzeugte Wankmomentenanteil vermindert und der von den Stellgliedern (3, 3′) an der Vorderradachse erzeugte Wankmomentenanteil erhöht.

5. Regelungseinrichtung nach Anspruch 4, dadurch gekennzeichnet, daß die Wankmomentenverteilung in der Übergangszeit (PÜ) in Abhängigkeit von dem Lenkraddrehwinkel, der Fahrzeuggeschwindigkeit und der Fahrzeugbeschleunigung und -verzögerung erfolgt.

6. Regelungseinrichtung nach Anspruch 4 oder 5, dadurch gekennzeichnet, daß die Veränderung der Wankmomentenverteilung in der Übergangszeit (PÜ) ab einem Umkehrzeitpunkt (U) derart vorgenommen wird, daß sich bis zum Erreichen der voreingestellten Wankmomentenverteilung der von den Stellgliedern (3″, 3‴) an der Hinterradachse erzeugte Wankmomentenanteil erhöht und der von den Stellgliedern (3, 3′) an der Vorderradachse erzeugte Wankmomentenanteil vermindert.

7. Regelungseinrichtung nach einem der Ansprüche 1 bis 6, dadurch gekennzeichnet, daß die Größe des von den Stellgliedern (3, 3′, 3″, 3‴) erzeugten Wankmoments zusätzlich vom Lenkraddrehwinkel und den etwa vertikalen Radeinfederungsgeschwindigkeiten abhängig ist.

8. Regelungseinrichtung nach einem der Ansprüche 1 bis 7, mit zwischen den Radträgern oder Radführungselementen und dem Fahrzeugaufbau angeordneten Dämpfern, dadurch gekennzeichnet, daß die Dämpfkraft der Dämpfer bei aktivierter Regelungseinrichtung erhöht ist.

## Claims

1. A control device for preventing a vehicle from rolling, comprising actuators (3, 3', 3", 3'") which generate force approximately in the vertical direction and are disposed between the vehicle body (13) and the wheel-holders or wheel guiding elements (2, 2', 2", 2'") and, after the control device has been actuated, partly through exceeding a threshold value of the steering-wheel angle of rotation, the actuators counteract the rolling movements of the vehicle body (13) by producing a stabilising rolling torque which is determined by the control device, during a parameter-dependent transition time (Pü) in dependence on the approximately vertical distances of the wheels from the vehicle body (13), and the control device takes account of the transverse acceleration of the vehicle and, after the control device has been actuated, the stabilising rolling torque is initially produced mainly by the actuators (3", 3'") on the rear-wheel axle whereas at the end of the transition time (Pü) the distribution of rolling torque between the front and rear axle has a fixed value, characterised in that the transverse acceleration of the vehicle is taken into account in that the control device is actuated after threshold values have been exceeded for the transverse acceleration of the vehicle and the angle of rotation of the steering wheel, and during the transition time (Pü) the control device determines and suitably alters the distribution of stabilising rolling torque between the front and rear axle.

2. A control device according to claim 1, characterised in that the parameters comprise the yawing-angular velocity of the vehicle and the approximately vertical spring-deflection speeds of the wheels or the angular velocity of the steering wheel.

3. A control device according to claim 1 or 2, characterised in that, after being actuated, the control device switches off when the values fall below the thresholds for transverse acceleration of the vehicle and the angle of rotation of the steering wheel.

4. A control device according to any of claims 1 to 3, characterised in that, during the transition time (Pü), the distribution of rolling torque is altered in that the proportion of rolling torque generated by the actuators (3'', 3''') on the rear axle is reduced and the proportion of rolling torque generated by the actuators (3, 3') on the front axle is increased.

5. A control device according to claim 4, characterised in that, during the transition time (Pü), the rolling torque is distributed in dependence on the angle of rotation of the steering wheel, the speed of the vehicle and the acceleration and deceleration of the vehicle.

6. A control device according to claim 4 or 5, characterised in that, during the transition time (Pü), starting from a turning-point (U), the rolling torque is distributed as follows: until the preset rolling-torque distribution is reached, the proportion of rolling torque generated by the actuators (3'', 3''') on the rear axle is increased and the proportion of rolling torque generated by the actuators (3, 3') on the front axle is decreased.

7. A control device according to any of claims 1 to 6, characterised in that the value of the rolling torque generated by the actuators (3, 3', 3'', 3''') is also dependent on the angle of rotation of the steering-wheel and the approximately vertical speed of spring deflection of the wheels.

8. A control device according to any of claims 1 to 7 comprising shock-absorbers disposed between the vehicle body and the wheel-holders or wheel guide elements, characterised in that the shock-absorbing capacity of the shock-absorbers is increased when the control device is actuated.

## Revendications

1. Dispositif de contrôle antiroulis pour un véhicule, avec des organes de réglage (3, 3', 3", 3"') disposés entre les supports de roues ou les éléments de guidage de roues (2, 2', 2", 2"') et la carrosserie (13) du véhicule et produisant un effort à peu près en direction verticale, organes qui après activation, provoquée par le dépassement d'une valeur de seuil de l'angle de rotation des roues, appliquent à la carrosserie (13) du véhicule, un couple antiroulis s'opposant au mouvement de roulis et qui est déterminé en fonction des distances à peu près verticales entre les roues et la carrosserie (13) du véhicule au cours d'une période de transition (PÜ) dépendant de paramètres, tandis que le dispositif de contrôle tient compte de l'accélération transversale du véhicule et tandis qu'après l'activation du dispositif de contrôle, le couple antiroulis est tout d'abord appliqué en majeure partie par les organes de réglage (3", 3"') sur l'essieu arrière et que la répartition de ce couple entre l'essieu avant et l'essieu arrière, comporte à la fin de la période de transition (PÜ) une valeur fixe, dispositif de contrôle caractérisé en ce que l'accélération transversale du véhicule est prise en compte, en ce que le dispositif de contrôle est activé par le dépassement de valeurs de seuil de cette accélération transversale du véhicule et de l'angle de rotation des roues directrices, et qu'il détermine au cours de la période de transition (PÜ) la répartition du couple antiroulis sur l'essieu avant et l'essieu arrière et la modifie de façon appropriée.

2. Dispositif de contrôle selon la revendication 1, caractérisé en ce que les paramètres comprennent la vitesse angulaire de giration du véhicule et les vitesses à peu près verticales de compression des ressorts de roues, ou bien la vitesse angulaire des roues directrices.

3. Dispositif de contrôle selon la revendication 1 ou la revendication 2, caractérisé en ce que le dispositif de contrôle activé est mis hors circuit lors du franchissement vers le bas de valeurs de seuil pour l'accélération transversale du véhicule et pour l'angle de rotation des roues directrices.

4. Dispositif de contrôle selon l'une des revendications 1 à 3, caractérisé en ce que la modification de la répartition du couple antiroulis au cours de la période de transition (PÜ) est effectuée de façon que la partie de ce couple appliquée à l'essieu arrière par les organes de réglage (3", 3"') diminue et que la partie de ce couple appliquée par les organes de réglage (3, 3') à l'essieu avant augmente.

5. Dispositif de contrôle selon la revendication 4, caractérisé en ce que la répartition du couple antiroulis au cours de la période de transition (PÜ) s'effectue en fonction de l'angle de rotation des roues directrices, de la vitesse du véhicule ainsi que de l'accélération et de la décélération du véhicule.

6. Dispositif de contrôle selon la revendication 4 ou la revendication 5, caractérisé en ce que la modification de la répartition du couple antiroulis au cours de la période de transition (PÜ) est effectuée à partir d'un instant d'inversion (U) de façon que la partie de ce couple appliquée par les organes de réglage (3", 3"') à l'essieu arrière, augmente et que la partie de ce couple appliquée à l'essieu avant par les organes de réglage (3, 3') diminue jusqu'à ce que soit atteinte la répartition du couple antiroulis préalablement établie.

7. Dispositif de contrôle selon une des revendications 1 à 6, caractérisé en ce que la grandeur du couple appliquée par les organes de réglage (3, 3', 3", 3"') dépend, en outre, de l'angle de rotation des roues directrices et des vitesses à peu près verticales de compression des ressorts des roues.

8. Dispositif de contrôle selon une des revendications 1 à 7, avec des amortisseurs disposés entre les supports de roues ou les éléments de guidage de roues et la carrosserie du véhicule, dispositif caractérisé en ce que l'effort des amortisseurs est augmenté lorsque le dispositif de contrôle est activé.

Fig. 1

# Fig.2